# EUROPEAN PATENT APPLICATION

(11) **EP 1 220 533 A2**
(43) Date of publication of application: **03.07.2002**
(21) Application number: 01850211.2
(22) Date of filing: 19.12.2001
(51) Int. Cl.: H04N 5/00

(54) **Common interface module and method related thereto**

(30) Priority: 29.12.2000 SE 0004936
(71) Applicant: Nokia Corporation, 02150 Espoo (FI)
(72) Inventor: Bergstrand, Johan, 595 92 Mjölby (SE)
(74) Representative: Estreen, Lars

(57) **Abstract**

A Common Interface module (40) is releasably connectable to a Common Interface connector (6) of a digital multimedia device (2) and comprises a Common Interface connector (44) including a command interface (44a) and a transport stream interface (44b-c) releasably connectable to a corresponding command interface (8) and a transport stream interface (10), respectively, of the Common Interface connector of the digital multimedia device. The module comprises further an IEEE 1394 link layer circuit (42) connected to the Common Interface connector of said module; an IEEE 1394 physical layer circuit (46) connected to said link layer circuit; and an IEEE 1394 Serial Bus interface (48) connected to said physical layer circuit and releasably connectable to an IEEE 1394 Serial Bus (38) to thereby enable said digital multimedia device to transmit a transport stream of digital multimedia and/or commands on said IEEE 1394 Serial Bus and/or to receive a transport stream of digital multimedia and/or commands from said IEEE 1394 Serial Bus.

## Description

### TECHNICAL FIELD OF THE INVENTION

The present invention generally relates to the field of digital multimedia processing, and more specifically to a Common Interface module and to a method related thereto.

### DESCRIPTION OF RELATED ART AND BACKGROUND OF THE INVENTION

A standard, IEEE 1394, has been proposed for connecting together various digital electronic consumer products on a local network. In particular, IEEE 1394, which is a IEEE standard for a high performance serial bus, defines a serial bus, which will be referred to as an IEEE 1394 Serial Bus, for connecting together various digital devices, such as e.g. digital camcorders, VCRs, A/V editing equipment, PCs, digital television receivers and integrated receivers decoders (IRD), also known as set-top-boxes.

The IEEE 1394 specification defines a physical connector, electrical signaling and a set of link and transaction protocols allowing the Serial Bus to self configure and carry audio, video and control information efficiently. A further set of additional protocols has also been defined to carry MPEG-2 data and provide control mechanisms between different items of equipment on the IEEE 1394 Serial Bus. These protocols are defined in the specification "Digital Interface for Consumer Electronic Audio/Video Equipment" (IEC 61883).

The IEEE 1394 specification defines mechanisms and protocols to carry two types of data, namely asynchronous and isochronous data. Asynchronous data generally has no requirements on the transport mechanism regarding time, for example the jitter imposed or the delay in transmission. This data can be used for instance for file data or general command and status data.

On the other hand, isochronous data has strong requirements for low jitter and a fixed or bounded delay for transmission and may be used for MPEG-2 coded audio and video data.

In view of the developments of the IEEE 1394 Serial Bus, IEEE 1394 has the potential to become a de facto standard for interconnection of all kind of digital equipment both in office and home environments.

There are however numerous kinds of digital equipment, particularly digital multimedia devices such as the Nokia Mediamaster 9800 S, which are not provided with IEEE 1394 communication capabilities, and thus such equipment is not connectable to other digital multimedia devices over the IEEE 1394 bus. This can be a severe limitation in some applications or environments.

### SUMMARY OF THE INVENTION

It is thus a main object of the present invention to provide a module, which is releasably connectable to a digital multimedia device, which enables the digital multimedia device to be connected to an IEEE 1394 Serial Bus and to accordingly transmit digital multimedia and/or commands onto said IEEE 1394 Serial Bus and/or receive digital multimedia and/or commands from said IEEE 1394 Serial Bus.

It is a further object of the invention to provide such a Common Interface module that is flexible, easy to connect, effective, and of low cost.

It is yet a further object of the invention to provide a method for enabling a digital multimedia device to transmit a transport stream, such as an MPEG-2 transport stream, of digital multimedia and/or commands onto an IEEE 1394 Serial Bus and/or to receive a transport stream of digital multimedia and/or commands from the IEEE 1394 Serial Bus, when the digital multimedia device does not have an in-built IEEE 1394 Serial Bus interface but is equipped with a so called Common Interface connector.

These objects, among others, are attained by Common Interface modules and methods as claimed in the appended claims.

By providing a module having a Common Interface connector to be plugged into a corresponding Common Interface connector of a digital multimedia device, and having an IEEE 1394 Serial Bus interface connected to said Common Interface connector of the module via internal circuitry, an IEEE 1394 compatible digital multimedia device may be obtained, whereby such a device with an inventive Common Interface module plugged-in can be connected to an IEEE 1394 based digital multimedia network.

By means of the IEEE 1394 Common Interface module MPEG-2 transport streams can be received from an IEEE 1394 Serial Bus. Such application might be interesting for customers having only one type of front-end, e.g. a cable front-end, integrated in their digital multimedia device, such as an integrated receiver decoder (IRD), but has the wish or need of receiving MPEG-2 transport streams from any other type of front-ends, such as a satellite or terrestrial front-end.

Any 1394 software needed can be handled by the processor of the digital multimedia device via the Common Interface connector command interface.

If needed, the transport stream from the internal front-end, i.e. within the digital multimedia device can be passed to the transport stream output and further transmitted onto an IEEE serial 1394 bus

One advantage of the present invention is that multiple additional front-ends can be added to the digital multimedia device in a very simple way by the end user. The additional front-end(s) may be placed remote of the digital multimedia device.

Further, as the IEEE 1394 Common Interface module is placed in front of the transport stream input of the digital multimedia device, ordinary hardware filters available in the digital multimedia device can be employed for filtering out the desired services and descrambling/decrypting units built into the device can be used.

### BRIEF DESCRIPTION OF THE DRAWINGS

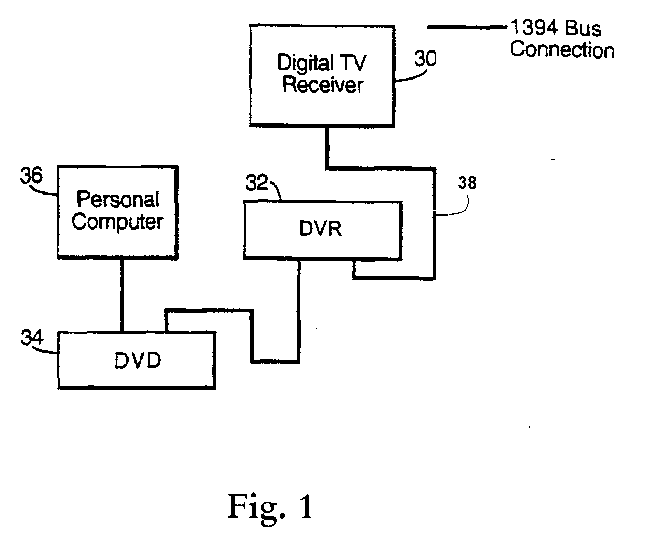

Further characteristics of the present invention and advantages thereof will be evident from the detailed description of embodiments of the present invention given hereinbelow and the accompanying Figs. 1-3, which are given by way of illustration only, and thus are not limitative of the present invention.
Fig. 1. illustrates schematically an IEEE 1394 based network of digital multimedia apparatus.
Fig. 2. illustrates a DVB Common Interface architecture.
Fig. 3 is a conceptual block diagram of the IEEE 1394 Common Interface module of the present invention.

### DETAILED DESCRIPTION OF EMBODIMENTS

In the following description, for purposes of explanation and not limitation, specific details are set forth, such as particular techniques in order to provide a thorough understanding of the present invention. However, it will be apparent to one skilled in the art that the present invention may be practiced in other embodiments that depart from these specific details. In other instances, detailed descriptions of well-known methods, protocols and hardware are omitted so as not to obscure the description of the present invention with unnecessary details.

As mentioned in the introduction, it has been proposed to link various digital electronic devices together using an IEEE 1394 Serial Bus. With reference to Fig. 1, which is a schematic block diagram of a IEEE 1394 digital communication system for multimedia applications, a digital TV receiver 30 is serially connected to a digital video recorder (DVR) 32, to a digital versatile disk unit (DVD) 34 and to a personal computer (PC) 36 by means of an IEEE 1394 Serial Bus 38.

The IEEE 1394 bus is a serial bus that allows a low cost mechanism to transmit audio, video and control information between equipment. It is very well suited to consumer applications and is expected to become widely used for many new digital consumer products. It is particularly attractive in that it offers a "plug and play" operation. In other words, an additional device may be connected into the network without any special reconfiguring of the network and protocols are included whereby devices on the network automatically determine what other devices are present.

The IEEE 1394 Trade Association is an industry grouping that brings together all of the interested industry parties for the IEEE 1394 Serial Bus. This Trade Association has worked to define a set of protocols, which offer a set of commands to be carried over the IEEE 1394 Serial Bus in the format of the IEC 61883 Function Control Protocol (FCP). The set of commands are known as Audio/Video Control-Command Transactions (AV/C-CTS) and are specified in the AV/C digital Interface Command Set Specification developed by the IEEE 1394 Trade Association (see AV/C Digital Interface Command Set Specification, Audio/Video Working Group of the IEEE 1394 Trade Association). The AV/C-CTS provides general set-up and control commands and sets of commands e.g. for a digital VCR and tuner. They are encoded using a header and a payload. The commands are sent using the AV/C-CTS protocol, with a particular AV/C-CTS command having a header, which is specific to its destination unit, for instance a video recorder, and indicating the basic required function, for instance replay of a video tape.

For further details of the IEEE 1394 standard and the AV/C-CTS protocol reference is made to the above documents. In summary, the IEEE 1394 standard has proven to be very attractive for the interconnection of digital multimedia devices and it may become a de facto standard for all kind of digital devices in the future both in office and home environments. There are, however, numerous kinds of digital equipment, particularly multimedia devices such as the Nokia Mediamaster 9800 S, which are not provided with IEEE 1394 communication capabilities, and thus such equipment is not connectable to the IEEE 1394 bus illustrated in Fig. 1.

Such limitation can in some applications or environments be troublesome, and the present invention relates to a technique to overcome such limitation by instead utilizing a Common Interface connector of the digital equipment. To this end the Common Interface connector standard will in the next be briefly overviewed.

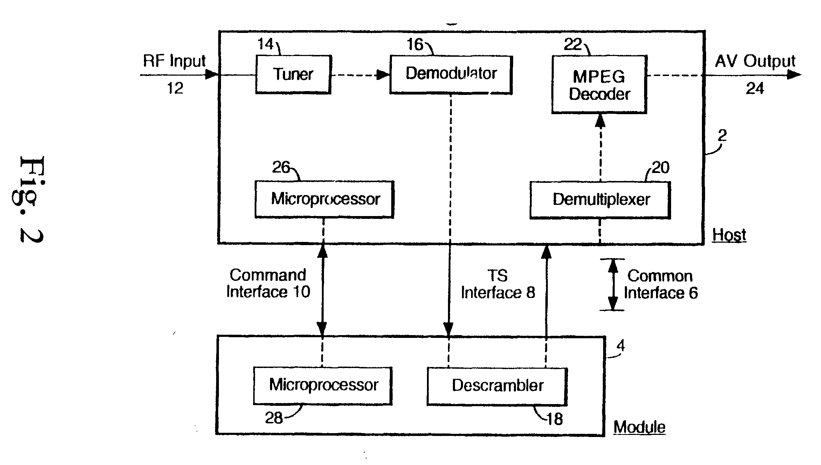

The Common Interface standard was specified for the connection of separate modules, such as a Conditional Access Module, to digital multimedia devices. Fig. 2 illustrates the architecture of this standard.

As illustrated, a digital multimedia device 2 is connected to a Common Interface module 4 such as a Conditional Access module by means of Common Interface connector 6. Other types of Common Interface modules might include RF input front ends for receiving, for instance, satellite transmissions. The DVB (Digital Video Broadcast) Common Interface specification currently defines the physical layer of the Common Interface to conform to the PC card standard as specified by the PCMCIA. In other words, physically the connection forming the Common Interface comprises a 68-way connector with the standard PC card arrangement as used in many personal computers today. However, the DVB Common Interface has been designed with a layered architecture to allow new physical layers (for example the smart card form factor) to be used with the same upper layer protocols. In other words, the processing conducted on either side of the physical connection has been designed such that different physical arrangements can be used for the connection without changing the way in which the standardized processing operates.

As illustrated in Fig. 2, the DVB Common Interface includes two main parts, namely a transport stream interface 8 and a command interface 10.

The transport interface 8 is used to transfer a transport stream from the receiver 2 to the module 4 and back to the receiver 2. In particular, the receiver 2 receives an RF input 12, a particular band is selected using a tuner 14 and this band is demodulated in the demodulator 16. The output of the demodulator 16 comprises a transport stream including time multiplexed virtual channels, such as an MPEG-2 transport stream. These virtual channels are transmitted over the transport stream interface 8 to a descrambler 18 in the module 4. The descrambler 18 identifies those virtual channels for which it is intended and sends back to the receiver 2, over the transport stream interface 8, a transport stream in which selected virtual channels have been descrambled. In the receiver 2, a demultiplexer 20 selects a required virtual channel and passes MPEG-2 packets relating to that virtual channel to an MPEG-2 decoder 22 which, in turn, produces an audio/video output 24. Optionally, a video encoder, a PAL encoder or other D/A converter apparatus (not illustrated) is provided to encode the output from the MPEG-2 decoder 22, such that the audio/video output is suitable to be directly connected to a presentation unit, such as television apparatus.

The second part of the DVB Common Interface is the command interface 10. This provides a high level protocol allowing the receiver 2 and the module 4 to communicate and, furthermore, for Applications in either the receiver 2 or module 4 to access Resources across the interface. In particular, standardized codes and data formats are provided for communication over the Command Interface.

A microprocessor 26 of the receiver 2 and a microprocessor 28 of the module 4 can communicate using the Command Interface. Furthermore, the overall system may include a MODEM, a graphics generator, etc and the Command Interface can be used to transfer control information to those devices also. As an example, the module 4 may wish to communicate with a remote control center via a MODEM for details to subscription fees and then control a TV display to indicate messages according to the subscription status. This communication can be achieved by means of the Command Interface 10.

While the Common Interface standard now has been briefly overviewed, the present inventive IEEE 1394 Common Interface module will be described.

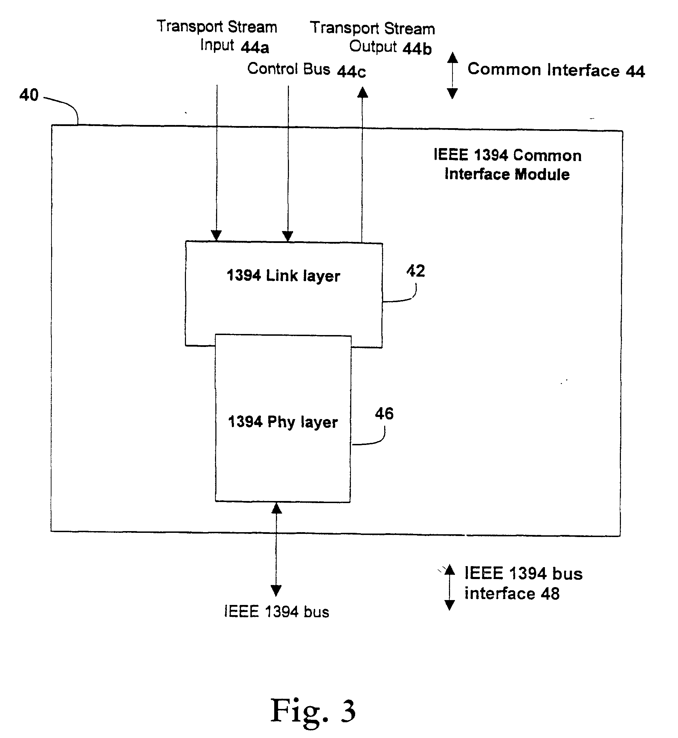

Turning to Fig. 3, the module 40 comprises a Common Interface connector 44 including a transport stream interface 44a-b and a command interface 44c. The Common Interface connector 44 of module 40 may be implemented as a standard PC card connector as specified by the PCMCIA as mentioned above, and is releasably connectable to a Common Interface connector of a digital multimedia device, including a transport stream interface and a command interface. For instance, the Common Interface connector 44 of module 40 may be plugged into the Common Interface connector 6 of receiver 2 in Fig. 2. Thus, transport stream interface 44a-b is connected to TS interface 8 and command interface 44c is connected to command interface 10.

As illustrated in Fig. 3 module 40 further comprises an IEEE 1394 link layer circuit 42 connected to Common Interface connector 44 of module 40 and an IEEE 1394 physical layer circuit 46 connected to link layer circuit 42. The link layer circuit 42 may e.g. be an IEEE 1394 link layer circuit with support for IEC61883-4 and the physical layer may e.g. be a 400 Mbit/s IEEE 1394 physical layer circuit with one or two ports. In a particular embodiment (not illustrated) the link layer circuit 42 and the IEEE 1394 physical layer circuit 46 are integrated into a single chip.

Further, the IEEE 1394 physical layer circuit ends in an IEEE 1394 Serial Bus interface 48, which is releasably connectable to an IEEE 1394 Serial Bus (not illustrated in Fig. 3) to thereby enable a digital multimedia device, to which the inventive IEEE 1394 Common Interface module is connected, to transmit a transport stream, such as an MPEG-2 transport stream, of digital multimedia and/or commands on the IEEE 1394 Serial Bus and/or to receive a transport stream of digital multimedia and/or commands from the IEEE 1394 Serial Bus. For instance, a digital multimedia device with a plugged-in module 40, can be connected into the IEEE 1394 Serial Bus based digital network of Fig. 1, e.g. in the position of digital TV receiver 30.

The common interface module may be provided with a microprocessor and appropriate software (not illustrated) to assist the digital multimedia device to transmit transport streams of digital multimedia and/or commands on the IEEE 1394 Serial Bus and to receive transport streams of digital multimedia and/or commands from the IEEE 1394 Serial Bus. The microprocessor could also allow external control of any additional filters built into the module, e.g. for allowing selection of services.

Alternatively, the microprocessor software of the digital multimedia device can be modified to assist in the provision of an IEEE 1394 compatible Common Interface module assembly.

The common interface module may be provided with additional circuitry arranged to buffer said transport stream between said Common Interface connector 44 and said IEEE 1394 link layer circuit 42 in order to assure proper synchronization thereof. Additional circuitry for synchronization of control commands between the digital multimedia device and the Common Interface module can provided between the command interface 44c of the Common Interface connector 44 and said IEEE 1394 link layer circuit 42.

The digital multimedia device, to which the inventive IEEE 1394 Common Interface module 40 is connected, may comprise any of a satellite, terrestrial and cable receiver.

In one particular application (not illustrated) the device, to which the inventive IEEE 1394 Common Interface module 40 is connected, is a digital multimedia device including a front-end (i.e. a tuner and a demodulator), a descrambling unit, an MPEG-2 decoder, and a video encoder and a Common Interface connector. This receiver is connected by means of the inventive Common Interface module and an IEEE 1394 Serial Bus to one or several external IEEE 1394 front-ends, each being adapted to transmit a transport stream of digital multimedia on the IEEE 1394 Serial Bus. For instance, the receiver front end may include a satellite receiver, while a terrestrial and/or a cable receiver are/is implemented as external IEEE 1394 front-ends. The inventive module enables the receiver to receive the transport streams of digital multimedia as transmitted on said IEEE 1394 Serial Bus.

Advantages of the present invention comprises inter alia the following ones:
- Multiple additional front-ends can be added in a very simple way by the end user.
- The front-end might be placed elsewhere in the house or office environment and has thus not to be located in immediate proximity of the receiver.
- External 1394 front-ends are already available in Japan and it is foreseen that they will be available also elsewhere in the near future.
- The IEEE 1394 Common Interface module is placed in front of the transport stream input and thus the receiver can use its ordinary hardware filters as well as any inbuilt descrambling/decrypting units.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A Common Interface module (40) releasably connectable to a Common Interface connector (6) of a digital multimedia device (2), said module comprising a Common Interface connector (44) including a transport stream interface (44a-b) and a command interface (44c) releasably connectable to a corresponding transport stream interface (8) and command interface (10), respectively, of the Common Interface connector of said digital multimedia device, **characterized in**:
- an IEEE 1394 link layer circuit (42) connected to the Common Interface connector of said module;
- an IEEE 1394 physical layer circuit (46) connected to said link layer circuit; and
- an IEEE 1394 Serial Bus interface (48) connected to said physical layer circuit and releasably connectable to an IEEE 1394 Serial Bus (38) to thereby enable said digital multimedia device to transmit a transport stream of digital multimedia and/or commands on said IEEE 1394 Serial Bus and/or to receive a transport stream of digital multimedia and/or commands from said IEEE 1394 Serial Bus.

2. The Common Interface module as claimed in claim 1 wherein said link layer circuit and said IEEE 1394 physical layer circuit are integrated into a single chip.

3. The Common Interface module as claimed in claim 1 or 2 wherein said Common Interface connector of said module is implemented as a standard PC card connector as specified by the PCMCIA.

4. The Common Interface module as claimed in any of claims 1-3 further comprising a processor and software to assist said digital multimedia device to transmit said transport stream of digital multimedia and/or commands on said IEEE 1394 Serial Bus and/or to receive said transport stream of digital multimedia and/or commands from said IEEE 1394 Serial Bus.

5. The Common Interface module as claimed in any of claims 1-4 further comprising additional circuitry arranged to buffer said transport stream between said Common Interface connector (44) and said IEEE 1394 link layer circuit (42) in order to assure proper synchronization thereof.

6. The Common Interface module as claimed in any of claims 1-5 further comprising additional circuitry for synchronization of control commands between the command interface 44c of the Common Interface connector 44 and said IEEE 1394 link layer circuit 42.

7. A method for enabling a digital multimedia device (2) to transmit a transport stream of digital multimedia and/or commands onto an IEEE 1394 Serial Bus (38) and/or to receive a transport stream of digital multimedia and/or commands from said IEEE 1394 Serial Bus, wherein said digital multimedia device comprises a Common Interface connector including a transport stream interface (8) and command interface (10), said method being **characterized by** the steps of:
- providing a Common Interface module (40) comprising a Common Interface connector (44) including a transport stream interface (44a-b) and a command interface (44c); an IEEE 1394 link layer circuit (42) connected to the Common Interface connector of said module; an IEEE 1394 physical layer circuit (46) connected to said link layer circuit; and an IEEE 1394 Serial Bus interface (48) connected to said physical layer circuit;
- connecting the Common Interface connector of said Common Interface module (40) to the Common Interface connector (6) of said digital multimedia device; and
- connecting the IEEE 1394 Serial Bus interface of said Common Interface module to said IEEE 1394 Serial Bus.

8. The method as claimed in claim 7 wherein said transmission of said transport stream of digital multimedia and/or commands onto the IEEE 1394 Serial Bus (38), and/or said reception of said transport stream of digital multimedia and/or commands from said IEEE 1394 Serial Bus, are/is assisted by means of a processor and software.
